# EUROPÄISCHE PATENTSCHRIFT

(11) **EP 1 566 122 B1**
(45) Veröffentlichungstag und Bekanntmachung des Hinweises auf die Patenterteilung: **11.10.2006**
(21) Anmeldenummer: 05003481.8
(22) Anmeldetag: 18.02.2005
(51) Int. Cl.: A47G 19/14, A47J 41/00

(54) **Tropffreie Kanne**
Dripless vessel
Récipient anti-goutte

(30) Priorität: 19.02.2004 DE 102004008423
(43) Veröffentlichungstag der Anmeldung: 24.08.2005
(73) Patentinhaber: LEIFHEIT AG, 56377 Nassau/Lahn (DE)
(72) Erfinder: Ohm, Heinz Josef, 65550 Limburg (DE); Wörsdörfer, Berno, 56414 Obernbach (DE)

(56) Entgegenhaltungen:
- EP-A- 1 077 181
- GB-A- 669 658
- US-A- 164 128
- US-A- 555 395
- US-A- 4 714 180

## Beschreibung

Die Erfindung betrifft einen Behälter, insbesondere Isolierbehälter, mit einem durch einen Deckel verschließbaren Ausguß mit Ausgußschnaupe und einer unter der Ausgußschnaupe angeordneten Tropfenauffangeinrichtung, wobei die Ausgußschnaupe abnehmbar über der Tropfenauffangeinrichtung im Ausguß angeordnet ist

Eines der größten Probleme bei Behältern, Getränkekannen und ganz besonders bei Kaffeekannen ist das Nachtropfen nach dem Ausgießen, wodurch an dem Behälter häßliche Streifen entstehen, die nach dem Abstellen auch die Tischwäsche verschmutzen können. Dieses Problem ist man in der Vergangenheit schon durch die unterschiedlichsten Mitteln angegangen, ohne bislang eine praktikable und auch ästhetisch ansprechende Lösung gefunden zu haben. So ist die einfachste und nach wie vor häufig praktizierte Möglichkeit, unter der Ausgußschnaupe ein saugfähiges Auffangelement anzuordnen. Diese Lösung kann weder von der ästhetischen noch von der hygienischen Seite aus befriedigen.

Weiter ist bekannt, die Ausgußschnaupe mit einem polymeren Material zum Beispiel Silikon, zu beschichten. Diese Lösung verhindert im Neuzustand weitgehend das Nachtropfen, hat aber den Nachteil, daß nach einer gewissen Gebrauchsdauer, insbesondere bei Kaffee, sich dennoch Rückstände bilden, die das Nachtropfverhalten zusehends verschlechtern.

Weiter ist durch die DE-OS 43 36 650 A1 bekannt, in der Ausgußschnaupe einen eine kapillare bildenden Einsatz vorzusehen. Auch bei dieser Lösung verschlechtert sich durch die Bildung von Rückständen das Nachtropfverhalten im Laufe der Zeit zusehends.

Aus US-A-164 128 offenbart einen Behälter mit einer abnehmbaren Ausgußschnaupe. Die Ausgußschnaupe weist zur ihrer Befestigung ein Außengewinde auf, mit dem diese in eine ein Innengewinde aufweisende Öffnung des Behälters einschraubbar ist. In einer anderen Ausführungsform ist die Ausgußschnaupe durch Reibschlussklemmung befestigt.

Schließlich ist eine Kanne bekannt, bei der unter der Ausgußschnaupe ein in ein Reservoir führender Rücklaufkanal angeordnet ist. Diese Ausführungsform ist technisch sehr aufwendig und somit in der Realisierung teuer und sie hat weiter den Nachteil, dass der dazu notwendige lange Kanal nur sehr umständlich zu reinigen ist.

Aufgabe der Erfindung ist es, einen Behälter mit einer Ausgußschnaupe zu schaffen, der mit einer Tropfenauffangeinrichtung versehen ist, die in der Herstellung keine zusätzlichen technischen Anforderungen stellt, die sicher über einen langen Zeitraum funktioniert und die vor allem einfach zu reinigen ist und bei der keine hygienischen Probleme entstehen. Zusätzlich soll sie sich ästhetisch in die Gesamtlinie des Behälters einfügen.

Diese Aufgabe wird durch einen Behälter gelöst, der dadurch gekennzeichnet ist, dass die Ausgußschnaupe einen Scheibenansatz aufweist, der zwischen einem Teil des Deckels und dem Ausguß einklemmt gehalten ist.

Dadurch, dass die gesamte Ausgußschnaupe abnehmbar ist, ist diese sehr leicht zu reinigen und sie gibt zur Reinigung die Tropfenauffangeinrichtung im Ausguß frei. Der Bereich kann dann ebenfalls sehr leicht gereinigt werden. Da die Ausgußschnaupe als selbständiges Bauteil ausgelegt ist, sind keine zusätzlichen technischen Maßnahmen am Gehäuse des Behälters erforderlich. Der Spielraum für designerische Gestaltungen wird deutlich erweitert.

Weitere Ausführungsbeispiele der Erfindung sind den Unteransprüchen zu entnehmen. Durch den scheibenförmigen Ansatz an der Ausgußschnaupe ist diese leicht zwischen dem Deckel des Behälters und dessen Ausguß einzuklemmen. Es sind keinerlei zusätzliche Halteeinrichtungen erforderlich. Dabei bietet es sich natürlich an, dass der Verschluss des Ausgusses im Deckel selbst angeordnet ist, der von der Ausgußschnaupe unbeeinflusst bleibt. Die Ausgußschnaupe beziehungsweise deren Scheibenansatz ist gegenüber dem Ausguß über eine Dichtung abgedichtet.

Ein weiterer Vorteil besteht darin, dass als Tropfenauffangeinrichtung ein verhältnismäßig großer Rückhalteraum, gebildet aus einer hochgezogenen Gehäusewand, einem an dieser angeformten, gegen den Schnauzenansatz gerichteten Überhang und der Unterseite der Ausgußschnaupe vorgesehen ist. Dadurch wird gewährleistet, dass auch bei einem überhasteten Ausgießen und abrupten Beenden des Ausgussvorganges ein sicheres Auffangen der Tropfen gewährleistet ist.

Durch den am Scheibenansatz angeformten senkrechten Ring wird eine sichere Handhabung beim Einsetzen der Ausgußschnaupe nach dem Reinigen erreicht. Die leichte Handhabung wird weiter dadurch unterstützt, dass ein am Gehäuse angeformter Haltering für den Deckel ebenfalls hochgezogen ist und somit die Ausgußschnaupe mit ihrem angeformten Ring passgenau zwischen diesem Haltering und der Innenseite der Gehäusewand eingesetzt werden kann. Die Verlängerung der Bajonettverrastung des Deckels beaufschlagt den Scheibenansatz der Ausgußschnaupe und gewährleistet dadurch eine sichere Abdichtung. Eine Fehlbedienung ist damit absolut ausgeschlossen.

Ein Ausführungsbeispiel der Erfindung wird im Folgenden anhand der Zeichnungen näher erläutert. Es zeigen:

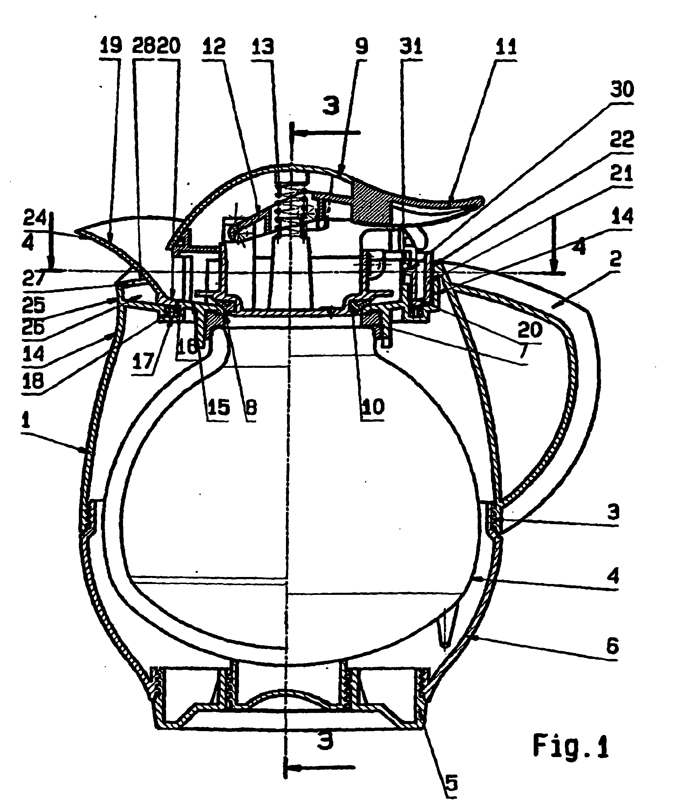

- Fig. 1: einen Längsschnitt durch eine Warmhaltekanne mit eingesetztem Vakuum-Glaskolben,
- Fig. 2: eine Teilansicht gemäß Fig. 1 mit geöffnetem Deckel,

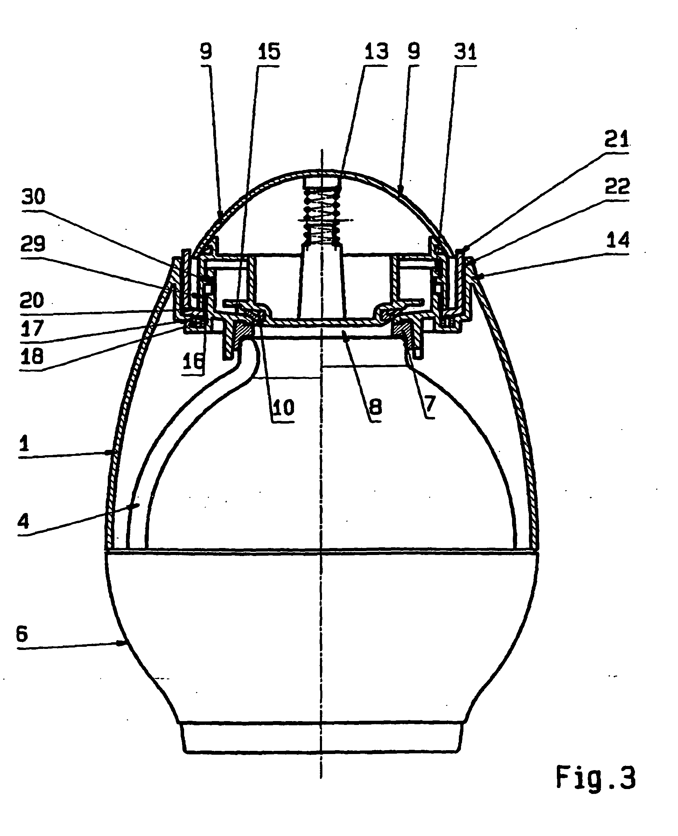

- Fig. 3: ein Teillängsschnitt gemäß der Linie III-III nach Fig. 1 und
- Fig. 4: ein Schnitt gemäß der Linie IV-IV nach Fig. 1.

Die Erfindung wird hier anhand einer lsolierkanne mit Vakuum-Glaskolben beschrieben; natürlich ist sie auch für einfache Kannen beziehungsweise Behälter anwendbar.

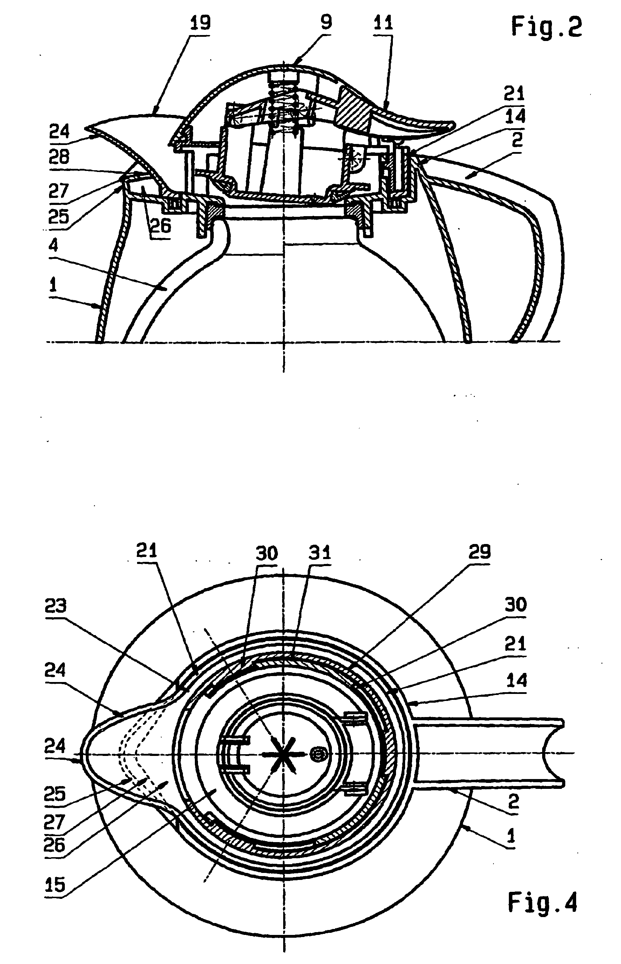

Ein Gehäuse 1 mit Handgriff 2 ist durch ein Gewinde 3 zweigeteilt und nimmt einen Vakuum-Glaskolben 4 auf. Der Vakuum-Glaskolben 4 wird über eine Druckschraube 5 in der Gehäuseunterseite 6 unter Zwischenschaltung einer Dichtung 7 gegen einen Ausguß 8 gepresst. Der Ausguß 8 ist Teil des Gehäuses 1 und wird über einen Deckel 9 unter Zwischenschaltung einer weiteren Dichtung 10 verschlossen. Der Deckel 9 kann durch eine Drucktaste 11 über ein Hebelsystem 12 gegen den Wiederstand einer Feder 13 angehoben werden. Dieser geöffnete Zustand des Deckels 9 ist in Fig. 2 dargestellt.

Der Ausguß 8, als Teil des Gehäuses 1 ist leicht ansteigend mit der Gehäusewand 14 verbunden. Die dadurch entstehende Ringfläche 15 ist mit einem Absatz 16 versehen, der in eine Ringnut 17 übergeht, die eine Dichtung 18 aufnimmt. Der Absatz 16 bildet einen Anschlag für einen an der Ausgußschnaupe 19 angeformten Scheibenansatz 20. Dieser Scheibenansatz 20 geht in einen senkrechten Ring 21 über, der an der Innenseite 22 der Gehäusewand 14 anliegt. Dieser senkrechte Ring 21 bildet eine Ausgußrinne 23 und geht in einen Schnaupenansatz 24 über.

Die Ringfläche 15 ist im Bereich des Schnaupenansatzes 24 ebenfalls etwas vorgezogen und bildet mit der hochgezogenen Gehäusewand 25 einen Rückhalteraum 26. Dieser Rückhalteraum 26 wird nach oben durch einen Überhang 27 begrenzt, wobei der Überhang 27 gegen den Schnaupenansatz 24 gerichtet ist und zwischen diesem einen Durchlaßschlitz 28 läßt.

Die Ausgußschnaupe 19 wird über den Scheibenansatz 20 durch eine Verlängerung 29 der Bajonettverrastung 30 des Deckels 9 gegen die Dichtung 18 gedrückt. Die Bajonettverrastung 30 des Deckels 9 wirkt mit einem an der Ringfläche 15 angeformten Haltering 31 zusammen.

### BEZUGSZEICHENLISTE

- 1: Gehäuse
- 2: Handgriff
- 3: Gewinde
- 4: Vakuum-Glaskolben
- 5: Druckschraube
- 6: Gehäuseunterseite
- 7: Dichtung
- 8: Ausguß
- 9: Deckel
- 10: weitere Dichtung
- 11: Drucktaste
- 12: Hebelsystem
- 13: Feder
- 14: Gehäusewand
- 15: Ringfläche
- 16: Absatz
- 17: Ringnut
- 18: Dichtung
- 19: Ausgußschnaupe
- 20: Scheibenansatz
- 21: senkr. Ring
- 22: Innenseite
- 23: Ausgußrinne
- 24: Schnaupenansatz
- 25: hochgezogene Gehäusewand
- 26: Rückhalteraum
- 27: Überhang
- 28: Durchlaßschlitz
- 29: Verlängerung
- 30: Haltering

## Patentansprüche

1. Behälter, insbesondere lsolierbehälter, mit einem durch einen Deckel (9) verschließbaren Ausguß (8) mit Ausgußschnaupe und einer unter der Ausgußschnaupe angeordneten Tropfenauffangeinrichtung, wobei die Ausgußschnaupe (19) abnehmbar über der Tropfenauffangeinrichtung (26) im Ausguß (8) angeordnet ist, **dadurch gekennzeichnet, dass** die Ausgußschnaupe (19) einen Scheibenansatz (20) aufweist, der zwischen einem Teil (29) des Deckels (9) und dem Ausguß (8) einklemmt gehalten ist.

2. Behälter nach Anspruch 1, **dadurch gekennzeichnet, dass** zwischen dem Scheibenansatz (20) und dem Ausguß (8) eine Dichtung (18) angeordnet ist.

3. Behälter nach einem der Ansprüche 1 oder 2, **dadurch gekennzeichnet, dass** die Tropfenauffangeinrichtung aus einem durch Ausguß (8), hochgezogener Gehäusewand (25) und einem an dieser angeformten gegen einen Schnaupenansatz (24) gerichtetem, einen Durchlaßschlitz (28) lassenden Überhang (27) gebildeten Rückhalteraum (26) besteht.

4. Behälter nach einem der Ansprüche 1 bis 3, **dadurch gekennzeichnet, dass** an dem Scheibenansatz (20) ein senkrechter, in die Ausgußschnaupe (19) übergehender Ring (21) angeformt ist, und dass dieser Ring (21) an der Innenseite (22) der Gehäusewand (14) anliegend ausgebildet ist.

5. Behälter nach Anspruch 4, **dadurch gekennzeichnet, dass** zwischen Ausguß (8) und der Innenseite (22) der Gehäusewand (14) ein Haltering (31) für den Deckel (9) angeformt ist.

6. Behälter nach Anspruch 5, **dadurch gekennzeichnet, dass** der Deckel (9) mit dem Haltering (31) über eine Bajonettverrastung (30) verbindbar ist.

7. Behälter nach Anspruch 6, **dadurch gekennzeichnet, dass** eine Verlängerung (29) der Bajonettverrastung (30) des Deckels (9) den Scheibenansatz (20) beaufschlagend ausgebildet ist.

8. Behälter nach einem der Ansprüche 1 bis 7, **dadurch gekennzeichnet, dass** der Verschluss des Ausgusses im Deckel angeordnet ist.

## Claims

1. Container, in particular insulating container, with a spout (8), which can be closed by a lid (9) and has a spout lip, and with a drip-catching device arranged below the spout lip, the spout lip (19) being arranged above the drip-collecting device (26) in the spout (8) in a manner such that it can be removed, **characterized in that** the spout lip (19) has a disc attachment (20) which is held clamped between a part (29) of the lid (9) and the spout (8).

2. Container according to Claim 1, **characterized in that** a seal (18) is arranged between the disc attachment (20) and the spout (8).

3. Container according to either of Claims 1 and 2, **characterized in that** the drip-collecting device comprises a retaining space (26) which is formed by spout (8), raised housing wall (25) and an overhang (27) which is integrally formed on the latter, is directed towards a lip extension (24) and leaves a passage slit (28).

4. Container according to one of Claims 1 to 3, **characterized in that** a vertical ring (21) merging into the spout lip (19) is integrally formed on the disc attachment (20), and **in that** this ring (21) is designed such that it bears against the inside (22) of the housing wall (14).

5. Container according to Claim 4, **characterized in that** a retaining ring (31) for the lid (9) is integrally formed between spout (8) and the inside (22) of the housing wall (14).

6. Container according to Claim 5, **characterized in that** the lid (9) can be connected to the retaining ring (31) via a bayonet-type catch (30).

7. Container according to Claim 6, **characterized in that** an extension (29) of the bayonet-type catch (30) of the lid (9) is designed such that it acts upon the disc attachment (20).

8. Container according to one of Claims 1 to 7, **characterized in that** the closure of the spout is arranged in the lid.

## Revendications

1. Récipient, en particulier récipient isolant, comprenant un système verseur (8) pouvant être fermé par un couvercle (9) avec un bec verseur et un dispositif de collecte des gouttes disposé sous le bec verseur, le bec verseur (19) étant disposé de manière amovible dans le système verseur (8) par-dessus le dispositif de collecte des gouttes (26), **caractérisé en ce que** le bec verseur (19) présente une pièce en forme de disque (20) qui est maintenue serrée entre une partie (29) du couvercle (9) et le système verseur (8).

2. Récipient selon la revendication 1, **caractérisé en ce qu'**un joint d'étanchéité (18) est prévu entre la pièce en forme de disque (20) et le système verseur (8).

3. Récipient selon l'une quelconque des revendications 1 ou 2, **caractérisé en ce que** le dispositif de collecte des gouttes se compose d'un espace de retenue (26) formé par le système verseur (8), une paroi de boîtier (25) relevée et un porte-à-faux (27) moulé sur celle-ci, orienté vers une pièce de bec (24), autorisant une fente de passage (28).

4. Récipient selon l'une quelconque des revendications 1 à 3, **caractérisé en ce qu'**un anneau vertical (21) se prolongeant par le bec verseur (19) est moulé sur la pièce en forme de disque (20), et **en ce que** cet anneau (21) est réalisé de manière à s'appliquer contre le côté intérieur (22) de la paroi du boîtier (14).

5. Récipient selon la revendication 4, **caractérisé en ce qu'**entre le système verseur (8) et le côté intérieur (22) de la paroi du boîtier (14) est moulé un anneau de retenue (31) pour le couvercle (9).

6. Récipient selon la revendication 5, **caractérisé en ce que** le couvercle (9) peut être connecté à l'anneau de retenue (31) par le biais d'un encliquetage à baïonnette (30).

7. Récipient selon la revendication 6, **caractérisé en ce qu'**un prolongement (29) de l'encliquetage à baïonnette (30) du couvercle (9) est réalisé de manière à solliciter la pièce en forme de disque (20).

8. Récipient selon l'une quelconque des revendications 1 à 7, **caractérisé en ce que** la fermeture du système verseur est disposée dans le couvercle.
